(19) Europäisches Patentamt
European Patent Office
Office européen des brevets

(11) Publication number: **0 079 190**
**B1**

(12) **EUROPEAN PATENT SPECIFICATION**

(45) Date of publication of patent specification: **01.10.86**

(51) Int. Cl.$^4$: **C 22 B 60/02,** C 01 B 25/235

(21) Application number: **82305811.0**

(22) Date of filing: **02.11.82**

(54) **The removal of solids from wet process phosphoric acid.**

(30) Priority: **09.11.81 US 319802**

(43) Date of publication of application:
**18.05.83 Bulletin 83/20**

(45) Publication of the grant of the patent:
**01.10.86 Bulletin 86/40**

(84) Designated Contracting States:
**BE DE FR GB IT**

(56) References cited:
**EP-A-0 016 264**
**GB-A- 785 602**
**US-A-4 263 148**

(73) Proprietor: **Exxon Research and Engineering Company**
**P.O. Box 390 180 Park Avenue**
**Florham Park New Jersey 07932 (US)**

(72) Inventor: **Ho, Win-Sow Winston**
**408 Poe Avenue**
**Westfield New Jersey (US)**
Inventor: **Bock, Jan**
**500 Juniper Lane**
**Bridgewater New Jersey (US)**

(74) Representative: **Field, Roger Norton et al**
**ESSO Engineering (Europe) Ltd.**
**Patents & Licences Apex Tower High Street**
**New Malden Surrey KT3 4DJ (GB)**

**EP 0 079 190 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a process for removing suspended solids from wet process phosphoric acid. More particularly, this invention relates to a process for removing suspended solids from a WPPA feed and to a process for extracting uranium therefrom.

Recovering uranium as a by-product from wet process phosphoric acid is well-known in the art. Phosphate rock is mined primarily to produce a high-phosphate containing fertilizer, the first step of which involves digesting the rock in sulfuric acid to produce a phosphoric acid solution which is known in the art as wet process phosphoric acid (WPPA). This WPPA contains uranium which can be recovered before the acid is further processed for making fertilizer. This WPPA generally contains about 30 wt.% $P_2O_5$ as phosphoric acid, about 2 g/l of ferrous ion and about 130 ppm of uranium. This uranium is present in the acid primarily as $UO_2^{2+}$ cations referred to in the art as uranyl ions, wherein the uranium is in the hexavalent, +6 state. In known processes for recovering uranium from WPPA, the uranium is extracted from the WPPA by contacting the WPPA with an extractant which is an oily, water-immiscible material consisting of a mixture of di-2-ethylhexyl phosphoric acid (D2EHPA) and trioctylphosphine oxide (TOPO) dissolved in an oily, organic liquid such as kerosene. The amount of uranium that the oily extractant can contain is limited by equilibrium conditions. This is quite low and is generally less than one gram of uranium per liter of extractant. The uranium enriched extractant is then separated from the WPPA and contacted with an aqueous solution containing a reducing agent, such as ferrous ions in an acid such as phosphoric acid, to convert the uranium to tetravalent U(IV) ions. The U(IV) ions are relatively insoluble in and are not re-extracted by the D2EHPA/TOPO-containing oil. This step results in stripping the uranium from the oily extractant into the aqueous reducing solution and the aqueous reducing solution is then further processed to recover the uranium. Typical of the prior art which teaches the recovery of uranium from WPPA by first contacting the acid with an oily extractant containing D2EHPA/TOPO, separating the uranium-enriched extractant from the uranium-reduced feed and then stripping the uranium from the uranium-enriched extractant with an aqueous reducing solution of ferrous ions in phosphoric acid are U.S. Patents 3,711,591 and 3,737,513.

An emulsion process for recovering uranium from uranium-bearing WPPA streams has recently been discovered. This process comprises contacting a uranium containing WPPA feed with globules of water-in-oil emulsion, said emulsion comprising microdroplets of an aqueous interior phase dispersed in an oily, continuous exterior phase containing at least one transfer agent for selectively transferring the uranium from the feed into the interior phase of the emulsion wherein the valence of the uranium species is changed, thereby trapping the uranium in the emulsion. The uranium enriched emulsion is then separated from the feed, the emulsion is broken and the uranium is recovered. In a preferred embodiment of this process, the uranium is present in the WPPA feed as hexavalent uranyl cations. The exterior phase is immiscible with both the interior phase and the feed and comprises a surfactant-containing hydrocarbon solution of at least one uranium transfer agent. It preferably contains a mixture of D2EHPA and TOPO as selective transfer agents for the uranyl ion. The interior phase of the emulsion comprises an acid solution containing a reducing agent which changes the uranyl to U(IV) ions, thereby trapping the uranium in the interior phase of the emulsion.

In all of these processes, it is desirable to remove the suspended solids from the WPPA feed prior to the uranium extraction process. These suspended solids result from digesting the phosphate rock in the sulfuric acid and are believed to constitute fine particles of gypsum along with particles of organic matter, some of which are referred to as humic acids. One way of removing these suspended solids from the WPPA feed is to add flocculants to the feed which flocculates the fine, suspended solid particles and make it easier to remove them from the feed by processes such as sedimentation with or without subsequent filtration (see e.g. EP—A—0016264).

It has now been discovered that the flocculation removal of suspended solids from a WPPA feed is significantly improved if the feed has been oxidized and contains excess oxidizing agent prior to the addition of the flocculation agent. That is, before a flocculating agent is added to the WPPA feed, an oxidizing agent is added to the WPPA feed in an amount in excess of that required for both the iron and uranium present therein to be in the trivalent and hexavalent states, respectively. Said excess is sufficient to oxidize at least about 0.2 g/l ferrous ion to ferric ion. Anionic flocculating agents are preferred. It has also been found that removing the suspended solids from a WPPA feed by this oxidization-flocculation process is particularly effective when the feed is to be used in an extraction process, e.g. a liquid membrane emulsion extraction process, for removing the uranium. It is also particularly effective when used in the above-mentioned water-in-oil emulsion uranium recovery process.

The Figure is a graph illustrating the effect of flocculating a WPPA feed both with and without preoxidizing the feed with excess oxidant.

The total amount of oxidant to be added to the WPPA feed will, of course depend on the particular feed and the process conditions. However, sufficient oxidizing agent must be added to the feed to oxidise any divalent ferrous ions to trivalent ferric ions and also to oxidize any tetravalent uranium ions to hexavalent uranium ions with excess oxidizing agent left in the feed. The excess oxidizing agent must be present in the WPPA feed in an amount sufficient to oxidise at least about 0.2 g/l and preferably at least about 0.4 g/l of ferrous ion to ferric ion. Any tetravalent uranium cations as well as ferrous cations present in the feed may

be oxidized to their respective hexavalent and trivalent states by adding oxidizing agent to the feed, by contacting the feed with air or oxygen containing gas, by combinations thereof, etc. In any event, once all of the iron and uranium present in the feed are in their trivalent and hexavelent states, respectively, excess oxidizing agent must be added to the feed in an amount at least sufficient to oxidize about 0.2 g/l and preferably 0.4 g/l of ferrous ion to ferric ion. While not wishing to be held to any particular theory, it is believed that the excess oxidizing agent serves to oxidize or partially oxidize at least a portion of the solids suspended in the feed and that this results in a synergistic effect in combination with the flocculating agent. Any suitable oxidizing agents may be used in the process of this invention; illustrative, but non-limiting examples of suitable oxidizing agents include chlorates, persulfates and peroxides such as hydrogen peroxide.

Although it is believed that the process of this invention will work with anionic, non-anionic and cationic flocculants, it is preferred to use one or more anionic flocculants. Polyacrylamides, including hydrolysed polyacrylamides, have been found to be particularly useful in the process of this invention. U. S. Patent No. 3,836,200, discloses the use of various types of polyacrylamides as flocculating agents, including their use in aqueous solutions of uranium ore that have been digested with sulfuric acid. However, this patent neither discloses nor suggests the unexpected synergistic effect of preoxidizing a WPPA feed with excess oxidizing agent prior to adding a flocculating agent thereto.

Pre-treating a WPPA feed with the oxidation-flocculation process of this invention to remove suspended solid particles therefrom, has been found to be particularly effective when the uranium is to be extracted from the feed using an emulsion extraction process wherein the extractant comprises a water-in-oil type of emulsion of the type disclosed in U. S. Patent No. 3,779,907.

It has been found that if one uses this type of process to extract uranium from a WPPA feed and if the WPPA feed has not been pre-treated to remove therefrom suspended solid particles, the liquid membrane type of emulsion will not fully coalesce after being contacted with the feed. That is, in this type of uranium extraction process, the WPPA feed is contacted with a water-in-oil emulsion which comprises (i) an aqueous interior phase dispersed in (ii) an oily exterior phase immiscible with both the interior phase and the feed, said interior phase comprising an acid solution containing a reducing agent and, optionally a uranium complexing agent, and said exterior phase comprising a surfactant-containing hydrocarbon solution of at least one uranium transfer agent to transfer the hexavalent uranium ion from the WPPA feed to the interior phase of the emulsion wherein the hexavalent uranium ion is trapped in the interior of the emulsion to form a uranium-rich emulsion and a uranium reduced feed solution. In this process, the WPPA feed is contacted with the emulsion under conditions of agitation to form globules of emulsion dispersed in the WPPA feed. After the contacting has taken place and the desired amount of uranium is extracted from the WPPA feed, the dispersion of globules of emulsion in the WPPA feed is passed to a settling zone wherein the uranium-reduced feed settles out on the bottom as an aqueous layer and the oily emulsion coalesces and floats to the top of the uranium depleated feed. However, it has been found that if the suspended solids are not removed from the feed prior to its contact with the emulsion, one experiences difficulty in achieving coalescence of the oily emulsion. It is believed that the suspended particles, which are of a very fine particle size, coat the individual globules of dispersed emulsion and prevent them from coalescing. This difficulty is avoided using the present invention.

In a preferred embodiment of this invention, the interior phase of the emulsion will be a phosphoric acid solution containing ferrous ions and the oily, water and feed-immiscible exterior phase of the emulsion will be a mixture of D2EHPA/TOPO in an aliphatic hydrocarbon which also contains a surfactant for forming and stabilizing the emulsion. The D2EHPA/TOPO in the exterior phase transports the hexavalent uranium cations from the WPPA feed into the interior phase of the emulsion wherein the uranium is stripped from the D2EHPA/TOPO by the phosphoric acid and reduced to tetravalent U(IV) ions by the ferrous ions and is thereby trapped in the emulsion.

Emulsions of this type are disclosed in U. S. Patent No. 3,779,907 and are referred to by those knowledgeable in the art as liquid membrane emulsions. Thus, the water immiscible exterior phase will comprise one or more surfactants dissolved in an oily, hydrophobic liquid immiscible with water and having dissolved therein one or more agents for transferring the uranium through said exterior phase. The oily liquid must, of course, be capable of dissolving both the surfactant and the transfer agent or agents and may be any liquid which is non-reactive and immiscible with both the interior and exterior phases. It is preferred that this liquid comprise one or more aliphatic hydrocarbons and it is particularly preferred that it have a flash point above the operating temperature of the process. Illustrative, but non-limiting examples of suitable liquids include substantially aliphatic hydrocarbons such as kerosene and paraffinic hydrocarbons such as Norpar 13, SK—100, Low Odor Paraffin Solvent (LOPS) and Solvent 100 Neutral (S—100N) which are available from the Exxon Chemical Company. (The word 'Norpar' is a registered Trade Mark, at least in the United Kingdom). It is understood, of course, that the hydrocarbon may contain one or more components such as other hydrocarbons, halogenated hydrocarbons, higher oxygenated compounds such as alcohols, ketones, acids and esters as long as the emulsion is stable and the exterior phase is immiscible with both the aqueous feed solution and the aqueous interior phase and permits transferring the uranium from the feed to the interior phase of the emulsion. The exterior phase of the emulsion will contain from about 60—98 weight % of this hydrocarbon liquid, preferably from about 75—95% and most preferably from about 85—95 weight %.

As hereinbefore stated, the oily, water immiscible external phase of the emulsion will contain one or more oil soluble surfactants for forming and stabilizing the emulsion, but which will not prohibit transfer of the uranium through the exterior phase to the interior phase. Suitable surfactants may be selected from among oil soluble anionic, cationic, and nonionic surfactants. Surfactants that have been found to be particularly suitable for use in the process of this invention include various derivatives of polyisobutylene succinic anhydride (PIBSA) which includes, but is not limited to various polyamine derivatives thereof having the general formula:

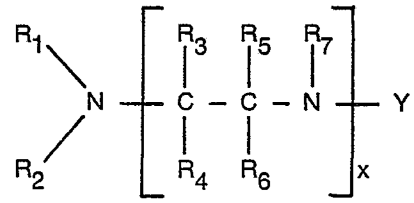

wherein $R_1$, $R_2$, $R_3$, $R_4$, $R_5$, $R_6$, and $R_7$ and Y are hydrogen $C_1$ to $C_{20}$ alkyl, $C_6$ to $C_{20}$ aryl, $C_7$ to $C_{20}$ alkyaryl radicals or substituted derivatives thereof; and x is an integer of from 1 to 100. $R_3$, $R_4$, $R_5$, $R_6$ and $R_7$ are preferably hydrogen, with x preferably varying from 3 to 20. The substituted derivatives are preferably oxygen, nitrogen, sulfur, phosphorus or halogen-containing derivatives. Various PIBSA-polyamine compounds that have been found useful in the practice of this invention include those taught in U. S. Patent No. 3,172,892.

A particular PIBSA polyamine derivative surfactant that has been found to be useful in the process of this invention is one wherein $R_1$ and $R_2$ taken together to form an alkyl succinic radical and wherein the surfactant is a compound having the general formula:

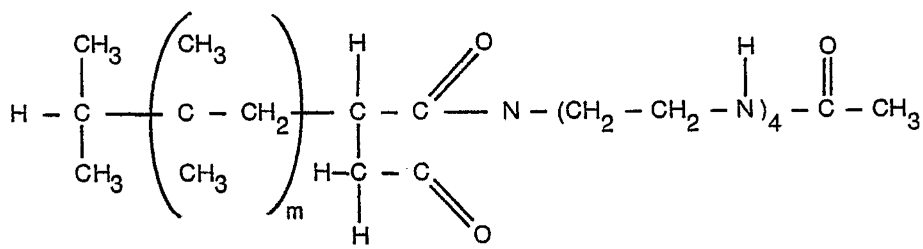

wherein m is an integer generally ranging from about 10—60 and more preferably 40, thereby giving said preferred polyamine derivative a molecular weight of about 2000. This surfactant will generally comprise from about 0.2 to 10 weight % of the exterior phase of the emulsion, preferably from about 0.5 to 5 weight % and still more preferably from about 1—3 weight %.

As hereinbefore stated, the external phase of the emulsion must contain an agent capable of transferring the uranium from the aqueous feed, through the oily external phase to the interior phase. Transfer agents found suitable for transferring cationic uranium species containing hexavalent uranium (i.e. $UO_2^{2+}$) through the external phase to the internal phase include a mixture of oil soluble dialkyl esters of phosphoric acid and trialkylphosphine oxide. In particular, a mixture of di(2-ethylhexyl) phosphoric acid (D2EHPA) and trioctylphosphine oxide (TOPO) are preferred for transporting the hexavalent uranyl ($UO_2^{2+}$) cations through the external phase of the emulsion. This mixture will not transfer uranium species wherein uranium exists in the tetravalent U(IV) state. In general, the transfer agent will comprise from between about 1—30 wt. % of the exterior phase of the emulsion, preferably from about 2—18 wt. % and most preferably from about 2—6 wt. %. When the transfer agent comprises a combination of D2EHPA and TOPO they will be in said exterior phase in a molar ratio ranging from about 1/1 to 10/1, preferably from 2/1 to 8/1 and, more preferably from about 2/1 to 7/1 of D2EHPA/TOPO.

As hereinbefore stated, the interior phase of the emulsion will be an aqueous acid solution containing a reagent capable of changing the valence state of the uranium transferred from the WPPA feed through the oily, external phase to trap the uranium in said interior phase. This interior phase will be an aqueous acid solution containing a reducing agent to reduce the uranium to the tetravalent state. There should be enough reducing agent present in the internal phase to reduce the uranium ion transported therein. Illustrative, but non-limiting examples of suitable reducing agents include acid solutions of ferrous or chromous ions such as an aqueous solution of ferrous sulfate in phosphoric acid wherein the concentration of the ferrous ion ranges from about 8—50 grams per liter, preferably from 10 to 40 g/liter and wherein the concentration of the phosphoric acid ranges from about 3—12 moles/liter and more preferably from about 5—8 moles/liter. The following reaction is believed to occur when reducing uranyl ($UO_2^{2+}$) cations with acidic ferrous sulfate:

$$2Fe^{2+} + UO_2^{2+} + 4H^{+} \longrightarrow 2Fe^{3+} + U^{4+} + 2H_2O$$

It is important that the concentration of phosphoric acid in the internal phase be approximately the same as in the feed in order to avoid excessive swelling and ultimately destruction of the emulsion. As a matter of convenience, the internal phase may be prepared from the WPPA feed by adding iron thereto.

The interior phase will comprise from about 15—80 volume percent of the emulsion, preferably from 30—70 and most preferably from 33—60 volume percent, i.e., the volume ratio of the oily exterior or membrane phase to the aqueous interior phase of the emulsion will range from about 6/1 to 1/4, more preferably from about 2/1 to 1/2, and still more preferably from about 2/1 to 1/1. The invention will be more readily understood by reference to the Examples below:

## Examples

In all the examples below the WPPA feed used was an actual sample of Central Florida WPPA comprising a 5.2M solution of $H_3PO_4$ containing 130 ppm of uranium, 1.78 g/l of ferrous ion and a suspended solids content of about 13,000 ppm. Absorbance measurements were made at 600 nm with a Beckman Model 35 spectrophotometer and the suspended solids content was measured with an IEC Model HN—S centrifuge at 1,000 rpm for 20 minutes. (The word 'Beckman' is a registered Trade Mark at least in the United Kingdom.)

### Example 1

In this experiment, 100 cc samples of the WPPA feed and various flocculants were placed in jars, shaken by hand for two minutes and allowed to settle for 5.8 hours. This produced flocculated solids which settled on the bottom of the jar leaving a uniform supernatant liquid above the settled solids. A portion of supernatant liquid was then withdrawn from each jar, placed in a standard spectrometer cell and its absorbance was measured.

The results are summarized in Table 1 and shows that the anionic flocculants were more effective than either the cationic or nonionic flocculants.

### Example 2

In this experiment, a 1500 cc sample of WPPA was flocculated in a 2 liter resin kettle equipped with a marine propeller mixer. The WPPA and Dow Separan MG700 anionic flocculant were mixed vigorously at 550 rpm for 1 min. and then slowly at 50 rpm for 9 min. The word 'Separan' is a registered Trade Mark, at least in the United Kingdom). The flocculant was used at a concentration of 5 mg/l. After mixing and settling, the particle sizes and the size distributions both for the flocculated WPPA and a sample of untreated WPPA were measured using a Malvern Scientific ST 1800 particle sizer which utilizes the principle of Fraunhofer Diffraction. Thes results are shown in Table 2.

The average particle size was increased with flocculation. More significantly, the small particles were eliminated. The particles less than 6.5 µm were 11.5% (by wt.) for the untreated WPPA whereas they were nil for the flocculated one. Particles of less than 29.5 µm were 36.5% for the untreated WPPA, but they were only 1.3% for the flocculated one.

### Example 3

A fresh, unoxidized sample of WPPA feed containing a ferrous ion concentration of 1.78 g/l and a total suspended solids content of about 13,000 ppm (by apparent volume) was flocculated at 60°C with an anionic, hydrolyzed polyacrylamide flocculant (Cyanamid Superflox 1202), at a dosage of 7.5 mg/l (5.6 ppm). After flocculation, the solids in the WPPA were allowed to settle. The results are shown in the Figure which shows that the absorbance decreased with an increase in settling time up to 60 min. At 60 min. settling time, the absorbance was 0.71, and the suspended solids content 1,100 ppm (by apparent volume).

This experiment was repeated, but with a fresh sample of WPPA which was oxidized before flocculation. The oxidation was accomplished by the use of 30% $H_2O_2$ at a concentration of 3 ml per liter of WPPA which oxidized all of the ferrous ion to ferric ion with enough excess $H_2O_2$ in the WPPA to oxidize an equivalent of 1.5 g/l of ferrous to ferric ion. These results are also shown in the Figure. Again, the absorbance decreased with settling time up to 60 min. At 60 min. settling time, the absorbance was 0.47 and the suspended solid content 600 ppm.

These results show that the suspended solid content for the case with oxidation was only about half of that for the case without oxidation. Thus, the effect of oxidation on the flocculation of fresh WPPA was very significant inasmuch as oxidation greatly improved the flocculation.

A second set of experiments were conducted to verify the oxidation effect. The absorbance without oxidation was 0.68 with a suspended solids content 1000 ppm (by apparant volume). With oxidation, the absorbance was 0.45 and the suspended solids content was 500 ppm.

### Example 4

This experiment demonstrates the coalescence difficulty encountered if the WPPA is not pretreated to remove the suspended solids when used in conjunction with a liquid membrane emulsion extraction process for extracting uranium from the WPPA. A liquid membrane emulsion for extracting the uranium from the WPPA feed was prepared in a Waring Blender at 10,000 rpm for four minutes. The emulsion had the following composition: *Exterior Phase* — 3 wt. % of a PIBSA — polyamine surfactant; 2.91 wt. %

D2EHPA; and 0.88 wt. % TOPO in LOPS: *Interior Phase* — a solution of 5M $H_3PO_4$ containing 30 g/l of ferrous ion. The volume ratio of the exterior to interior phase of the emulsion was 2/1. The emulsion and WPPA feed were mixed in a standard 2 liter resin kettle equipped with a Barinco mixer. The mixer was operated at 1,000 rpm.

About 300 cc of the emulsion was first placed in the kettle and then sequentially mixed for five minutes with ten separate, 900 cc portions of fresh WPPA feed. After each mixing operation, the feed and emulsion phases were allowed to settle and the uranium-depleted feed removed from the kettle. The volumetric treat ratio of emulsion to feed for each sample of feed was 1/3. Thus, each volume of emulsion was ultimately contacted with 30 volumes of fresh feed.

The results are shown in Table 3.

Example 5

This example demonstrates the effectiveness of removing the suspended solids from a WPPA feed used in a liquid membrane emulsion uranium extraction process.

The same apparatus, feed and emulsion, etc. used in Example 4 are also used in this experiment. Three runs were made. In each run the same emulsion to feed treat ratio of 1/3 was used, with three successive mixing contacts of 5 min. for a total treat ratio of 1/9. Thus, each volume of emulsion was ultimately contacted with 30 volumes of fresh feed. In the first run the WPPA was untreated which resulted in over 70% of the emulsion globules being uncoalesced after 3 min. settling time. In the second run the WPPA was first passed through a 20+ μm cotton filter and at least 60% of the globules were uncoalesced after a 3 min. settling time. In the third run, the feed was flocculated with 5 mg/l of Dow Separan MG700 and then filtered through the cotton filter prior to contacting the emulsion. This resulted in all of the globules being coalesced after 3 min. separation time.

TABLE 1

The effect of the type of Flocculant on wet process Phosphoric Acid

| Type of Flocculant | Flocculant | Concentration of Flocculant (MG/L) | Absorbance |
|---|---|---|---|
| Nonionic | Polyacrylamide (American Cyanide P—250) | 2 | 0.618 |
| | Polyacrylamide (Dow Separan MGL) | 2 | 0.606 |
| Cationic | Polyethyleneimine (Arsynco P—1000) | 2 | 0.729 |
| | Polyvinylpyrrolidone | 2 | 0.737 |
| | Quaternized (10%) Polyethyleneimine (Dow XD—30267) | 2 | 0.652 |
| | Quaternized (100%) Polyethylemine (Dow XD—30341) | 2 | 0.694 |
| Anionic | Hydrolysed Polyacrylamide (Dow Separan MG 700) | 2 | 0.412 |
| | Hydrolysed Polyacrylamide (Dow Purifloc A 27)* | 2 | 0.466 |
| No Flocculant | | 0 | 0.684 |

* 'Purifloc' is a registered Trade Mark, at least in the United Kingdom

TABLE 2
The effect of Flocculation on the Particle Size of WPPA Solids

| Pretreatment of WPPA | Weight Average Particle Size (μm) | Particle Size Range (μm) | Weight Percent (%) | Cumulative Weight Percent (%) | Number Percent (%) |
|---|---|---|---|---|---|
| | | 197.0—91.6 | 21.66 | 78.34 | 0.01 |
| | | 91.6—56.1 | 19.59 | 58.75 | 0.04 |
| | | 45.1—39.5 | 13.03 | 45.72 | 0.09 |
| | | 39.5—29.5 | 9.25 | 36.47 | 0.17 |
| | | 29.5—22.6 | 7.01 | 29.46 | 0.29 |
| | | 22.6—17.6 | 5.38 | 14.08 | 0.49 |
| None (Original WWPA) | 70.0 | 17.6—13.6 | 4.46 | 19.62 | 0.87 |
| | | 13.6—10.6 | 3.42 | 16.19 | 1.43 |
| | | 10.6—8.3 | 2.65 | 13.55 | 2.33 |
| | | 8.3—6.5 | 2.08 | 11.47 | 3.80 |
| | | 6.5—5.1 | 1.61 | 9.86 | 6.11 |
| | | 5.1—4.0 | 1.25 | 8.61 | 9.85 |
| | | 4.0—3.2 | 0.90 | 7.71 | 15.28 |
| | | 3.2—2.5 | 0.78 | 6.94 | 24.82 |
| | | 2.5—2.0 | 0.54 | 6.39 | 35.43 |
| | | 197.0—91.6 | 34.26 | 65.74 | 2.27 |
| | | 91.6—56.1 | 51.10 | 14.64 | 25.26 |
| | | 56.1—39.5 | 10.69 | 3.95 | 19.49 |
| | | 39.5—29.5 | 2.67 | 1.28 | 12.93 |
| | | 29.5—22.6 | 0.83 | 0.46 | 9.31 |
| | | 22.6—17.6 | 0.28 | 0.17 | 6.95 |
| Flucculation | 90.0 | 17.6—13.6 | 0.11 | 0.06 | 5.72 |
| | | 13.6—10.6 | 0.04 | 0.02 | 4.40 |
| | | 10.6—8.3 | 0.01 | 0.01 | 3.45 |
| | | 8.3—6.5 | 0.01 | 0.00 | 2.76 |
| | | 6.5—5.1 | 0.00 | 0.00 | 2.24 |
| | | 5.1—4.0 | 0.00 | 0.00 | 1.71 |
| | | 4.1—3.1 | 0.00 | 0.00 | 1.42 |
| | | 3.2—2.5 | 0.00 | 0.00 | 1.23 |
| | | 2.5—2.0 | 0.00 | 0.00 | 0.83 |

TABLE 3
The effect of Organics—Extended Contact of LM with WPPA

| No. of Contact | Total Volume Ratio of WPPA Exposed to the Emulsion | Phase Separation Time (Min.) | Uncoalesced LM Globules at 3 min. after Phase separation time | Remarks |
|---|---|---|---|---|
| 1 | 3 | 1.50 | 70% | |
| 2 | 6 | 2.30 | 95% | Solids at Interface |
| 3 | 9 | 2.82 | 95% | Solids at interface |
| 4 | 12 | 3.23 | 95% | Solids at Interface |
| 5 | 15 | 3.97 | 95% | "Crud" at Interface |
| 6 | 18 | 4.0 | 98% | "Crud" increased |
| 7 | 21 | 4.0 | 100% | "Crud" increased |
| 8 | 24 | 4.0 | 100% | "Crud" increased |
| 9 | 27 | 4.0 | 100% | "Crud" increased |
| 10 | 30 | 4.0 | 100% | 7% "Crud" |

**Claims**

1. A process for removing suspended solids from wet process phosphoric acid (WPPA) by adding a flocculating agent to flocculate the suspended solids and separating the flocculated solids characterised in that before adding the flocculating agent sufficient oxidising agent is added to the acid so that substantially all the iron and uranium are oxidised to their trivalent and hexavelant states respectively, with excess oxidising agent remaining, said excess being sufficient to oxidise at least about 0.2 g/l of ferrous ion to ferric ion.

2. A process according to claim 1 wherein said flocculating agent comprises one or more anionic flocculating agents.

3. A process according to either of claims 1 and 2 wherein said excess oxidizing agent is sufficient to oxidize at least about 0.4 g/l of ferrous ion to ferric ion.

4. A process according to any one of the preceding claims wherein the treated WPPA is used as a feed in a uranium extraction process.

5. A uranium extraction process wherein a WPPA feed is contacted with a water-in-oil emulsion which comprises (i) an aqueous interior phase dispersed in (ii) an oily exterior phase immiscible with both the interior phase and the feed, said interior phase comprising an acid solution containing a reducing agent and said exterior phase comprising a surfactant-containing hydrocarbon solution of at least one uranium transfer agent to transfer the hexavalent uranium ion from the WPPA feed to the interior phase of the emulsion wherein the hexavalent uranium ion is trapped in the interior of the emulsion to form a uranium-rich emulsion and a uranium reduced feed solution, characterised in that the WPPA feed is pretreated to remove suspended solids therefrom by the process according to any one of claims 1 to 3.

**Patentansprüche**

1. Verfahren zur Entfernung von suspendierten Feststoffen aus Naßphosphorsäure (WPPA) durch Zugabe eines Flockungsmittels zur Ausflockung der suspendierten Feststoffe und Abtrennung der ausgeflockten Feststoffe, dadurch gekennzeichnet, daß vor Zugabe des Flockungsmittels der Säure ausreichend Oxydationsmittel zugesetzt wird, so daß im wesentlichen alles Eisen und Uran in den dreiwertigen bzw. sechswertigen Zustand oxydiert werden, und ein Überschuß an Oxydationsmittel verbleibt, der ausreicht, um mindestens etwa 0,2 g/l Eisen (II)—Ion zu Eisen (III)—Ion zu oxydieren.

2. Verfahren nach Anspruch 1, dadurch gekennzeichnet, daß das Flockungsmittel ein oder mehrere anionische Flockungsmittel umfaßt.

3. Verfahren nach Anspruch 1 oder 2, dadurch gekennzeichnet, daß der Überschuß an Oxydationsmittel ausreichend ist, um mindestens etwa 0,4 g/l Eisen (II)—Ion zu Eisen (III)—Ion zu oxydieren.

4. Verfahren nach einem der vorangehenden Ansprüche, dadurch gekennzeichnet, daß die behandelte Naßphosphorsäure als Einsatzmaterial in einem Uranextraktionsverfahren verwendet wird.

5. Uranextraktionsverfahren, bei dem ein Naßphosphorsäureeinsatzmaterial mit einer Wasser-in-Öl-Emulsion kontaktiert wird, die (i) eine wässrige innere Phase dispergiert in (ii) einer öligen äußeren Phase, die sowohl mit der inneren Phase als auch mit dem Einsatzmaterial nicht mischbar ist, umfaßt, wobei die innere Phase eine Säurelösung umfaßt, die ein Reduktionsmittel enthält, und die äußere Phase eine tensidhaltige Kohlenwasserstofflösung von mindestens einem Uranüberführungsmittel für den Übergang des sechswertigen Uranions aus dem Naßphosphorsäureeinsatzmaterial in die innere Phase der Emulsion umfaßt, wobei das sechswertige Uranion im Inneren der Emulsion unter Bildung einer uranreichen Emulsion und einer an Uran abgereicherten Einsatzmateriallösung eingeschlossen wird, dadurch gekennzeichnet, daß das Naßphosphorsäureeinsatzmaterial vorbehandelt wird, um suspendierte Feststoffe daraus nach dem Verfahren gemäß einem Ansprüche 1 bis 3 zu entfernen.

**Revendications**

1. Procédé pour l'élimination des matières solides en suspension d'un acide phosphorique du procédé par voie humide (WPPA) consistant à ajouter un agent de floculation pour floculer les matières solides en suspension et à séparer les matières solides floculées, caractérisé en ce que, avant l'addition de l'agent de floculation, on ajoute suffisamment d'oxydant à l'acide pour que la quasi-totalité du fer et de l'uranium soit oxydée respectivement en leurs états trivalent et hexavalent et qu'il reste un excès d'oxydant, ledit excès étant suffisant pour oxyder au moins 0,2 g/l environ d'ion ferreux en ion ferrique.

2. Procédé selon la revendication 1, dans lequel ledit agent de floculation comprend on ou plusieurs agents de floculation anioniques.

3. Procédé selon l'une ou l'autre des revendications 1 et 2, dans lequel l'oxydant en excès est suffisant pour oxyder au moins 0,4 g/l environ d'ion ferreux en ion ferrique.

4. Procédé selon l'une quelconque des revendications précédentes, dans lequel le WPPA traité est utilisé comme charge d'alimentation dans un procédé d'extraction d'uranium.

5. Procédé d'extraction d'uranium, dans lequel une charge de WPPA est mise en contact avec une émulsion eau dans huile qui comprend (i) une phase interne aqueuse dans (ii) une phase externe huileuse non miscible à la fois avec la phase interne et avec la charge, ladite phase interne comprenant une solution

acide contentant un réducteur et ladite phase externe comprenant une solution hydrocarbonée d'au moins un agent de transfert d'uranium contenant un agent de surface pour transférer l'ion uranium hexavalent de la charge de WPPA vers la phase interne de l'émulsion où l'ion uranium hexavalent est retenu au sein de l'émulsion pour former une émulsion riche en uranium et une solution d'alimentation réduite en uranium, caractérisé en ce que la charge de WPPA est prétraitée en vue de l'élimination des matières solides en suspension à partir de celle-ci par le procédé conforme à l'une quelconque des revendications 1 à 3.

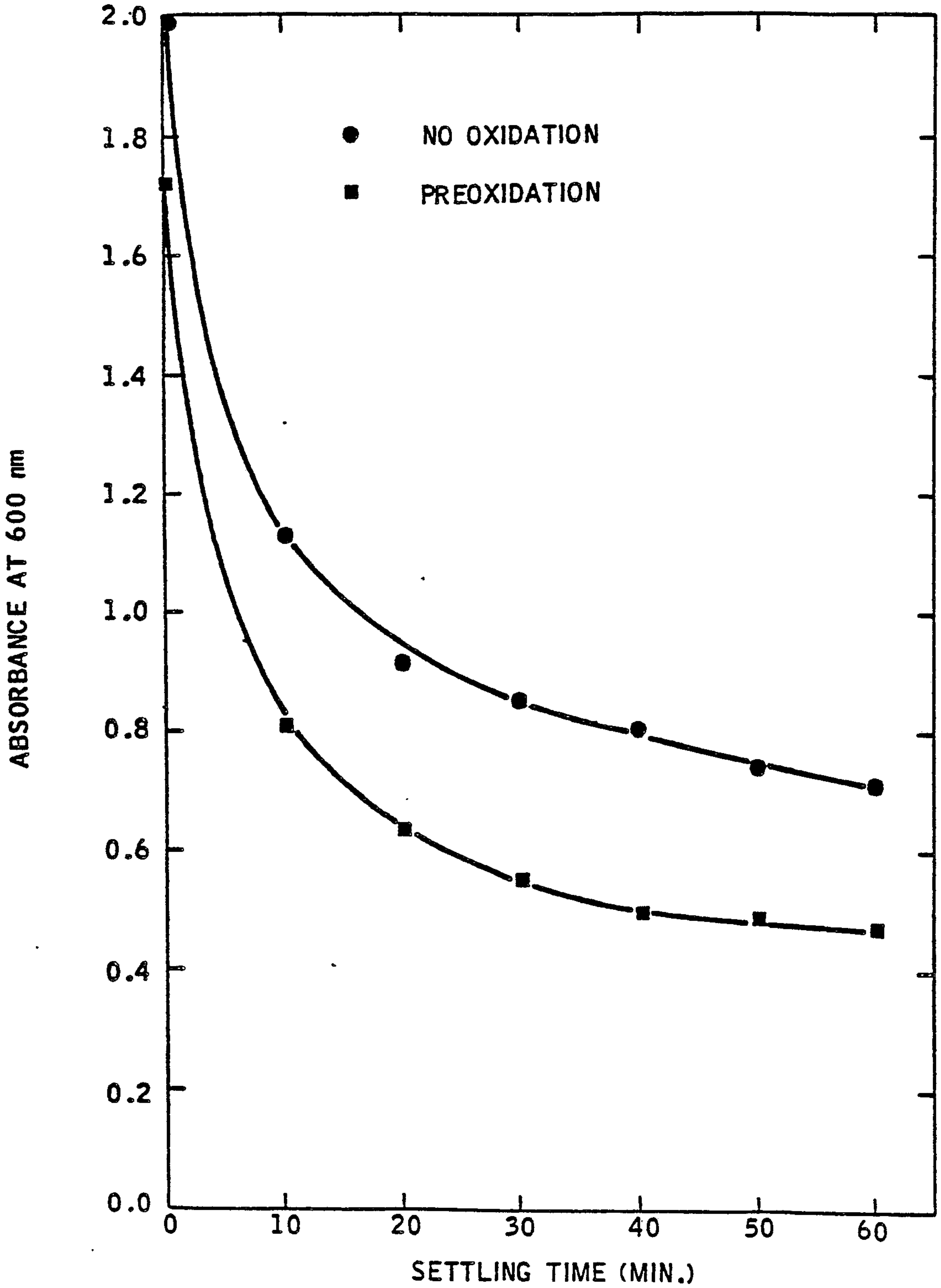
ABSORBANCE AT 600 nm
2.0
1.8
1.6
1.4
1.2
1.0
0.8
0.6
0.4
0.2
0.0
NO OXIDATION
PREOXIDATION
0
10
20
30
40
50
60
SETTLING TIME (MIN.)